# EUROPEAN PATENT APPLICATION

(11) **EP 4 404 034 A1**
(43) Date of publication of application: **24.07.2024**
(21) Application number: 23220352.1
(22) Date of filing: 27.12.2023
(51) Int. Cl.: G06F 3/0362, G01C 23/00, G06F 3/04847, B64D 43/00, B60K 35/00

(54) **MULTIFUNCTIONAL CONTROLLER AND DISPLAY**

(30) Priority: 19.01.2023 US 202318156518
(71) Applicant: Honeywell International Inc., Charlotte, NC 28202 (US)
(72) Inventor: KEBERLE, Kelsey, Charlotte, 28202 (US); MONTOYA, Roberto Gudino, Charlotte, 28202 (US); HINK, Michael, Charlotte, 28202 (US)
(74) Representative: LKGlobal UK Ltd.

(57) **Abstract**

An apparatus and method are provided for providing dual touch and physical control inputs for an aircraft control panel. The apparatus comprises a cylindrical shaped control knob that is rotatably mounted on the aircraft control panel. The control knob includes a movable surface around the exterior of control knob that is manually adjusted by a user, a touch screen along the circular top of the control knob that is tactilely adjusted by the user, and a display screen located on the touch screen that shows values of flight performance characteristics that are controlled by inputs from the control knob. A flight display panel shows image data of the aircraft with reference to the flight performance characteristics.

## Description

### TECHNICAL FIELD

The present invention generally relates to aircraft control systems, and more particularly relates to a multifunctional controller and display.

### BACKGROUND

Many pilots have expressed concerns about using all touch-screen based controls. This is especially true during turbulence or vibrations of the aircraft when most pilots prefer physical controls. Hence, there is a need for a multifunctional controller and display.

### BRIEF SUMMARY

This summary is provided to describe select concepts in a simplified form that are further described in the Detailed Description. This summary is not intended to identify key or essential features of the claimed subject matter, nor is it intended to be used as an aid in determining the scope of the claimed subject matter.

An apparatus is provided for providing dual touch and physical control inputs for an aircraft control panel. The apparatus comprises: a cylindrical shaped control knob that is rotatably mounted on the aircraft control panel, where the control knob comprises, a movable surface around the exterior of control knob, where the movable surface may be manually adjusted by a user, a touch screen along the circular top of the control knob, where the touch screen may be tactilely adjusted by a user, and a display screen located on the touch screen that shows values of flight performance characteristics, where the values of the flight performance characteristics are controlled by inputs from the control knob; and a flight display panel that shows image data of the aircraft with reference to the flight performance characteristics.

A method is provided for providing dual touch and physical control inputs for an aircraft control panel. The method comprises: displaying the values of the flight performance characteristics by inputs from a cylindrical shaped control knob that is rotatably mounted on the aircraft control panel, where the control knob comprises a movable surface around the exterior of control knob, where the movable surface may be manually adjusted by a user, a touch screen along the circular top of the control knob, where the touch screen may be tactilely adjusted by a user, and a display screen located on the touch screen that shows values of flight performance characteristics; selecting the flight characteristics to be adjusted, where the flight characteristics are selected with the touch screen; adjusting a flight characteristic with the movable surface; adjusting an alternative flight characteristic with the touch screen; and showing image data of the aircraft with reference to the flight performance characteristics on a flight display panel.

Furthermore, other desirable features and characteristics of the method and system will become apparent from the subsequent detailed description and the appended claims, taken in conjunction with the accompanying drawings and the preceding background.

### BRIEF DESCRIPTION OF THE DRAWINGS

The present invention will hereinafter be described in conjunction with the following drawing figures, wherein like numerals denote like elements, and wherein:
FIG. 1 shows a vehicle system that includes a display system in accordance with one embodiment.
FIG 2 shows a perspective view of a multifunctional controller and display in accordance with one embodiment;
FIG. 3 shows diagrams of types of inputs for a multifunctional controller and display in accordance with one embodiment;
FIG. 4 shows views of the display for a multifunctional controller and display in accordance with one embodiment;
FIG. 5 shows a perspective view of a cockpit layout for multiple flight displays and a multifunctional controller and display in accordance with one embodiment;
FIG. 6 shows a perspective view of multiple flight displays and a multifunctional controller and display in accordance with one embodiment;
FIG. 7 shows a perspective view of multiple flight displays and multiple multifunctional controllers and displays in accordance with one embodiment; and
FIG. 8 shows a flowchart depicting a method for providing dual touch and physical control inputs for an aircraft control panel.

### DETAILED DESCRIPTION

The following detailed description is merely exemplary in nature and is not intended to limit the invention or the application and uses of the invention. As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention which is defined by the claims. Furthermore, there is no intention to be bound by any expressed or implied theory presented in the preceding technical field, background, brief summary, or the following detailed description.

As used herein, the term module refers to any hardware, software, firmware, electronic control component, processing logic, and/or processor device, individually or in any combination, including without limitation: application specific integrated circuit (ASIC), an electronic circuit, a processor (shared, dedicated, or group) and memory that executes one or more software or firmware programs, a combinational logic circuit, and/or other suitable components that provide the described functionality. The provided system and method may be separate from, or integrated within, a preexisting mobile platform management system, avionics system, or aircraft flight management system (FMS).

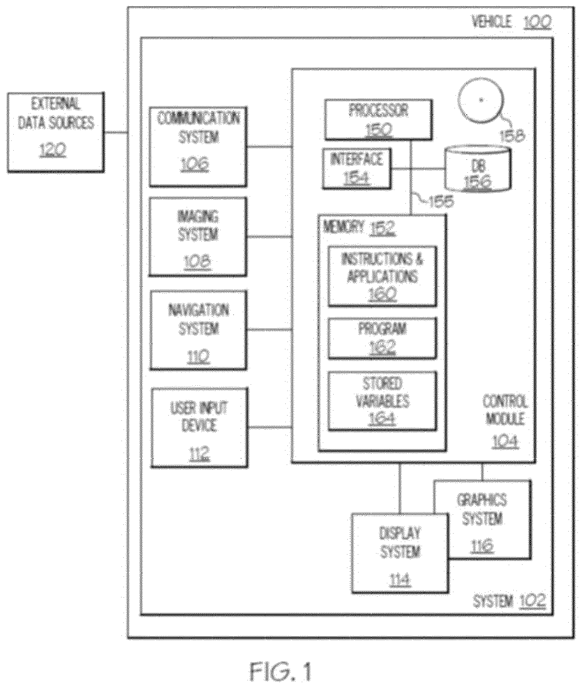

Turning now to FIG. 1, in the depicted embodiment, the vehicle system 102 includes: the control module 104 that is operationally coupled to a communication system 106, an imaging system 108, a navigation system 110, a user input device 112, a display system 114, and a graphics system 116. The operation of these functional blocks is described in more detail below. In the described embodiments, the depicted vehicle system 102 is generally realized as an aircraft flight deck display system within a vehicle 100 that is an aircraft; however, the concepts presented here can be deployed in a variety of mobile platforms, such as land vehicles, spacecraft, watercraft, and the like. Accordingly, in various embodiments, the vehicle system 102 may be associated with or form part of larger aircraft management system, such as a flight management system (FMS).

In the illustrated embodiment, the control module 104 is coupled to the communications system 106, which is configured to support communications between external data source(s) 120 and the aircraft. External source(s) 120 may comprise air traffic control (ATC), or other suitable command centers and ground locations. Data received from the external source(s) 120 includes the instantaneous, or current, visibility report associated with a target landing location or identified runway. In this regard, the communications system 106 may be realized using a radio communication system or another suitable data link system.

The imaging system 108 is configured to use sensing devices to generate video or still images and provide image data therefrom. The imaging system 108 may comprise one or more sensing devices, such as cameras, each with an associated sensing method. Accordingly, the video or still images generated by the imaging system 108 may be referred to herein as generated images, sensor images, or sensed images, and the image data may be referred to as sensed data. In an embodiment, the imaging system 108 comprises an infrared ("IR") based video camera, low-light TV camera, or a millimeter wave (MMW) video camera. The IR camera senses infrared radiation to create an image in a manner that is similar to an optical camera sensing visible light to create an image. In another embodiment, the imaging system 108 comprises a radar based video camera system. Radar based systems emit pulses of electromagnetic radiation and listen for, or sense, associated return echoes. The radar system may generate an image or video based upon the sensed echoes. In another embodiment, the imaging system 108 may comprise a sonar system. The imaging system 108 uses methods other than visible light to generate images, and the sensing devices within the imaging system 108 are much more sensitive than a human eye. Consequently, the generated images may comprise objects, such as mountains, buildings, or ground objects, that a pilot might not otherwise see due to low visibility conditions.

In various embodiments, the imaging system 108 may be mounted in or near the nose of the aircraft (vehicle 100) and calibrated to align an imaging region with a viewing region of a primary flight display (PFD) or a Head Up display (HUD) rendered on the display system 114. For example, the imaging system 108 may be configured so that a geometric center of its field of view (FOV) is aligned with or otherwise corresponds to the geometric center of the viewing region on the display system 114. In this regard, the imaging system 108 may be oriented or otherwise directed substantially parallel to an anticipated line-of-sight for a pilot and/or crew member in the cockpit of the aircraft to effectively capture a forward looking cockpit view in the respective displayed image. In some embodiments, the displayed images on the display system 114 are three dimensional, and the imaging system 108 generates a synthetic perspective view of terrain in front of the aircraft. The synthetic perspective view of terrain in front of the aircraft is generated to match the direct out-the-window view of a crew member, and may be based on the current position, attitude, and pointing information received from a navigation system 110, or other aircraft and/or flight management systems.

Navigation system 110 is configured to provide real-time navigational data and/or information regarding operation of the aircraft. The navigation system 110 may be realized as a global positioning system (GPS), inertial reference system (IRS), or a radio-based navigation system (e.g., VHF omni-directional radio range (VOR) or long range aid to navigation (LORAN)), and may include one or more navigational radios or other sensors suitably configured to support operation of the navigation system 110, as will be appreciated in the art. The navigation system 110 is capable of obtaining and/or determining the current or instantaneous position and location information of the aircraft (e.g., the current latitude and longitude) and the current altitude or above ground level for the aircraft. Additionally, in an exemplary embodiment, the navigation system 110 includes inertial reference sensors capable of obtaining or otherwise determining the attitude or orientation (e.g., the pitch, roll, and yaw, heading) of the aircraft relative to earth.

The user input device 112 is coupled to the control module 104, and the user input device 112 and the control module 104 are cooperatively configured to allow a user (e.g., a pilot, co-pilot, or crew member) to interact with the display system 114 and/or other elements of the vehicle system 102 in a conventional manner. The user input device 112 may include any one, or combination, of various known user input device devices including, but not limited to: a touch sensitive screen; a cursor control device (CCD) (not shown), such as a mouse, a touchpad, a touchscreen, a trackball, or joystick; a keyboard; one or more buttons, switches, or knobs; a voice input system; and a gesture recognition system. In embodiments using a touch sensitive screen, the user input device 112 may be integrated with a display device. Non-limiting examples of uses for the user input device 112 include: entering values for stored variables 164, loading or updating instructions and applications 160, and loading and updating the contents of the database 156, each described in more detail below.

The generated images from the imaging system 108 are provided to the control module 104 in the form of image data. The control module 104 is configured to receive the image data and convert and render the image data into display commands that command and control the renderings of the display system 114. This conversion and rendering may be performed, at least in part, by the graphics system 116. In some embodiments, the graphics system 116 may be integrated within the control module 104; in other embodiments, the graphics system 116 may be integrated within the display system 114. Regardless of the state of integration of these subsystems, responsive to receiving display commands from the control module 104, the display system 114 displays, renders, or otherwise conveys one or more graphical representations or displayed images based on the image data (i.e., sensor based images) and associated with operation of the vehicle 100, as described in greater detail below. In various embodiments, images displayed on the display system 114 may also be responsive to processed user input that was received via a user input device 112.

In general, the display system 114 may include any device or apparatus suitable for displaying flight information or other data associated with operation of the aircraft in a format viewable by a user. Display methods include various types of computer generated symbols, text, and graphic information representing, for example, pitch, heading, flight path, airspeed, altitude, runway information, waypoints, targets, obstacle, terrain, and required navigation performance (RNP) data in an integrated, multi-color or monochrome form. In practice, the display system 114 may be part of, or include, a primary flight display (PFD) system, a panel-mounted head down display (HDD), a head up display (HUD), or a head mounted display system, such as a "near to eye display" system. The display system 114 may comprise display devices that provide three dimensional or two dimensional images, and may provide synthetic vision imaging. Non-limiting examples of such display devices include cathode ray tube (CRT) displays, and flat panel displays such as LCD (liquid crystal displays) and TFT (thin film transistor) displays. Accordingly, each display device responds to a communication protocol that is either two-dimensional or three, and may support the overlay of text, alphanumeric information, or visual symbology.

As mentioned, the control module 104 performs the functions of the vehicle system 102. With continued reference to FIG. 1, within the control module 104, the processor 150 and the memory 152 (having therein the program 162) form a novel processing engine that performs the described processing activities in accordance with the program 162, as is described in more detail below. The control module 104 generates display signals that command and control the display system 114.

The control module 104 includes an interface 154, communicatively coupled to the processor 150 and memory 152 (via a bus 155), database 156, and an optional storage disk 158. In various embodiments, the control module 104 performs actions and other functions in accordance with other embodiments. The processor 150 may comprise any type of processor or multiple processors, single integrated circuits such as a microprocessor, or any suitable number of integrated circuit devices and/or circuit boards working in cooperation to carry out the described operations, tasks, and functions by manipulating electrical signals representing data bits at memory locations in the system memory, as well as other processing of signals.

The memory 152, the database 156, or a disk 158 maintain data bits and may be utilized by the processor 150 as both storage and a scratch pad. The memory locations where data bits are maintained are physical locations that have particular electrical, magnetic, optical, or organic properties corresponding to the data bits. The memory 152 can be any type of suitable computer readable storage medium. For example, the memory 152 may include various types of dynamic random access memory (DRAM) such as SDRAM, the various types of static RAM (SRAM), and the various types of non-volatile memory (PROM, EPROM, and flash). In certain examples, the memory 152 is located on and/or co-located on the same computer chip as the processor 150. In the depicted embodiment, the memory 152 stores the above-referenced instructions and applications 160 along with one or more configurable variables in stored variables 164. The database 156 and the disk 158 are computer readable storage media in the form of any suitable type of storage apparatus, including direct access storage devices such as hard disk drives, flash systems, floppy disk drives and optical disk drives. The database may include an airport database (comprising airport features) and a terrain database (comprising terrain features). In combination, the features from the airport database and the terrain database are referred to map features. Information in the database 156 may be organized and/or imported from an external source 120 during an initialization step of a process.

The bus 155 serves to transmit programs, data, status and other information or signals between the various components of the control module 104. The bus 155 can be any suitable physical or logical means of connecting computer systems and components. This includes, but is not limited to, direct hard-wired connections, fiber optics, infrared and wireless bus technologies.

The interface 154 enables communications within the control module 104, can include one or more network interfaces to communicate with other systems or components, and can be implemented using any suitable method and apparatus. For example, the interface 154 enables communication from a system driver and/or another computer system. In one embodiment, the interface 154 obtains data from external data source(s) 120 directly. The interface 154 may also include one or more network interfaces to communicate with technicians, and/or one or more storage interfaces to connect to storage apparatuses, such as the database 156.

It will be appreciated that the vehicle system 102 may differ from the embodiment depicted in FIG. 1. As mentioned, the vehicle system 102 can be integrated with an existing flight management system (FMS) or aircraft flight deck display.

During operation, the processor 150 loads and executes one or more programs, algorithms and rules embodied as instructions and applications 160 contained within the memory 152 and, as such, controls the general operation of the control module 104 as well as the vehicle system 102. In executing the process described herein, the processor 150 specifically loads and executes the novel program 162. Additionally, the processor 150 is configured to process received inputs (any combination of input from the communication system 106, the imaging system 108, the navigation system 110, and user input provided via user input device 112), reference the database 156 in accordance with the program 162, and generate display commands that command and control the display system 114 based thereon.

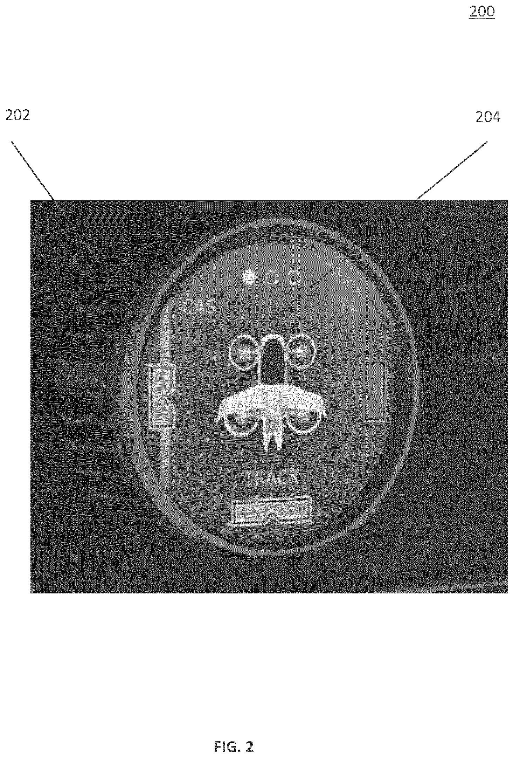

Turning now to FIG. 2, a perspective view is shown of a multifunctional controller and display 200 in accordance with one embodiment. The controller 200 is cylindrically shaped control knob and it is typically mounted on an aircraft control panel. The control knob includes a rotatable surface 202 around the exterior of control knob where it may be manually adjusted by a user by dialing in a clockwise and/or counter-clockwise direction. A touch screen 204 is located along the circular top surface of the control knob where it may be tactilely adjusted by a user. A display screen located on the touch screen that shows values of flight performance characteristics, which are controlled by inputs from the control knob or touch screen. The multifunctional controller 200 replaces several different control devices for an aircraft both touchscreen and physical. The controller provides physical controls and haptic feedback during turbulence and other dynamic environments when needed by aircrew. In summary, the controller provides a physical controller and data input device that provides the flight crew with a stable and predictable way to change flight data while in dynamic flight environment.

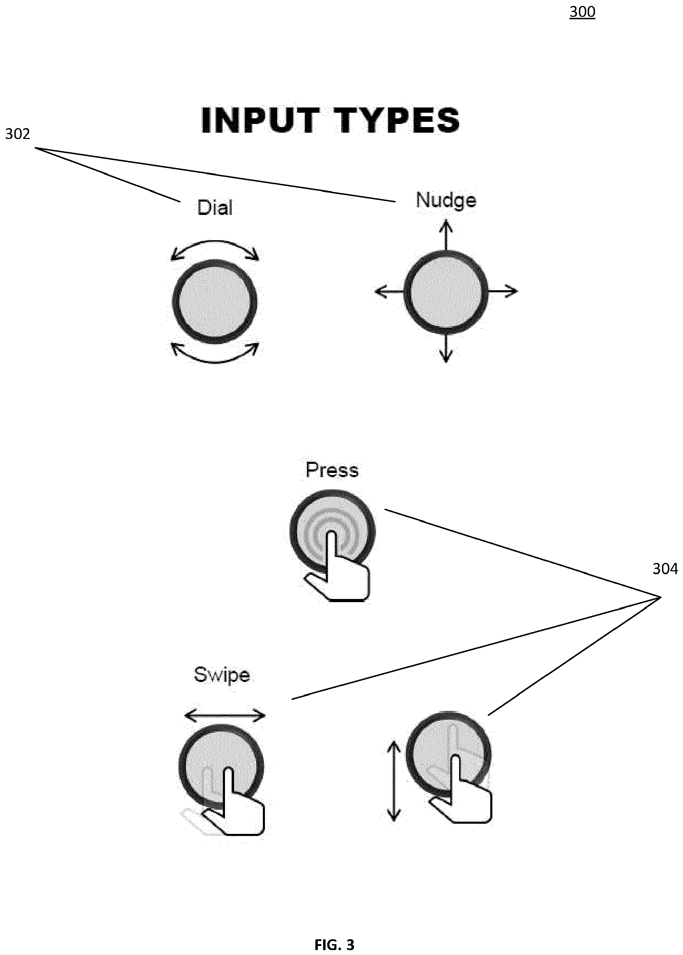

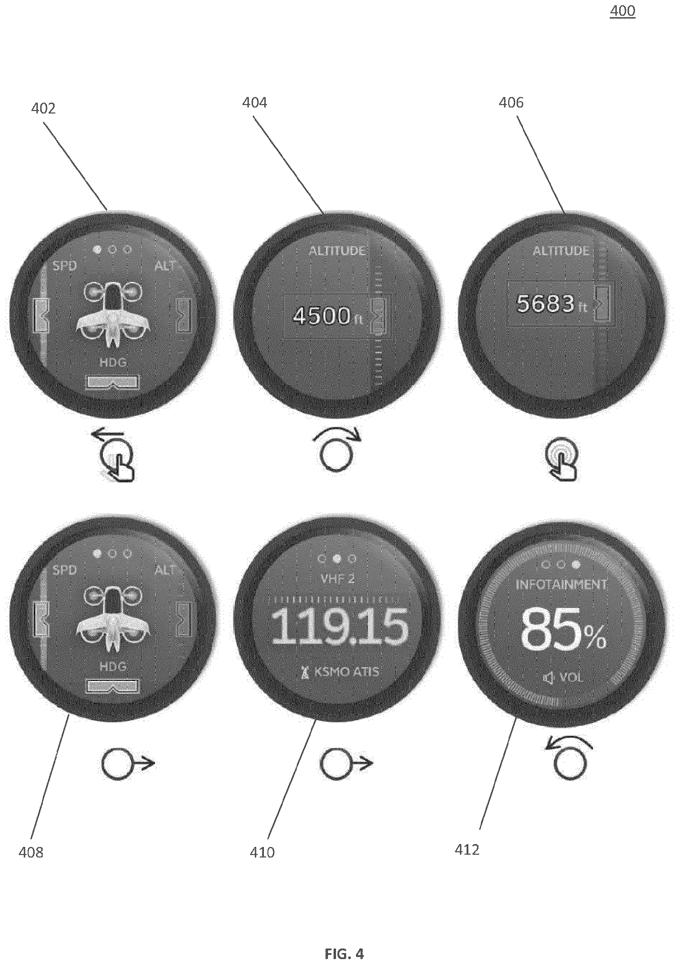

Turning now to FIG. 3, diagrams 300 are shown of types of inputs for a multifunctional controller and display in accordance with one embodiment. The inputs 302 for the rotatable surface of the control knob include rotating in a clockwise and/or counter-clockwise direction. Also, the control knob may be nudged in a vertical and/or horizontal direction similar to a joystick. The touch screen may receive inputs 304 from a touch or press as well as swiping in a vertical and/or horizontal direction. Turning now to FIG. 4, various views 400 are shown of the display for a multifunctional controller and display in accordance with one embodiment. Each function for input is shown on a home screen and it may be selected for input by swiping the touchscreen for inputting information for that selected function.

In one example, the heading (HDG) of the aircraft is adjusted by swiping the touchscreen 402. In an alternative, the heading (HDG) of the aircraft is adjusted by nudging the control knob 408. In another example, the altitude of the aircraft is set with the rotatable dial 404. In an alternative, the altitude of the aircraft is set by pressing the touch screen 406. In other embodiments, a touch pad (not shown) on the touchscreen could be used to type in the numerals for the desired value of the flight characteristic. In another example, the radio frequency of the aircraft is set by nudging the control knob 410. In still another example, the radio volume is adjusted with the rotatable dial 412. It should be understood that a wide variety of flight characteristics may be controlled and adjusted by the various types of inputs from the control knob. Additionally, these input controls may be customized to the user's preference in other embodiments.

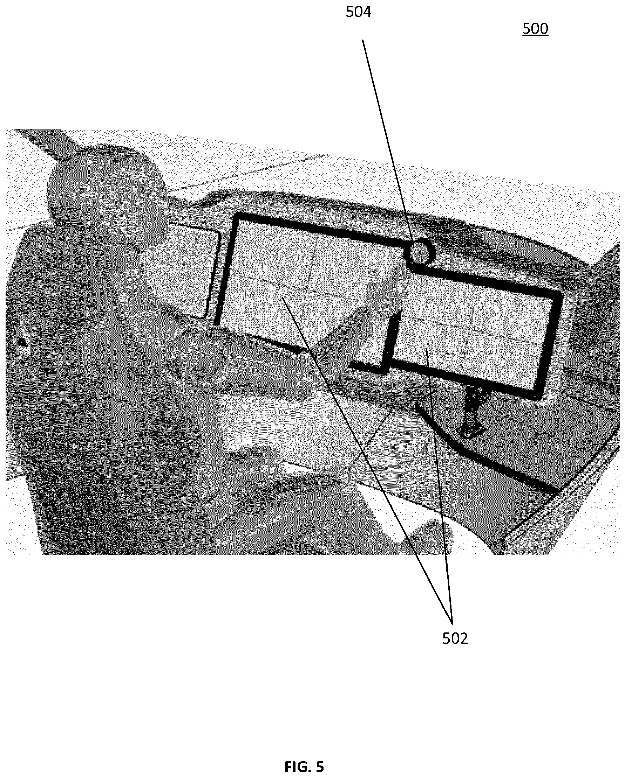

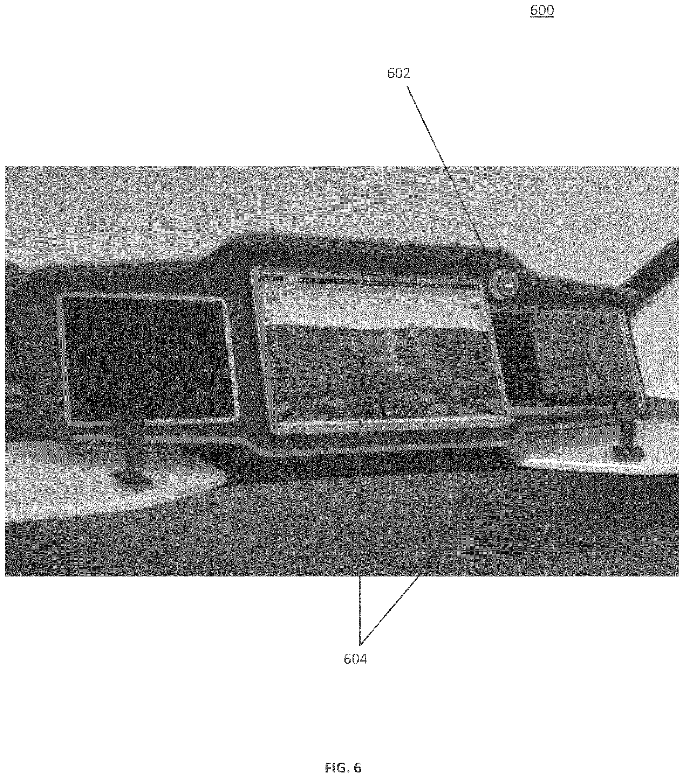

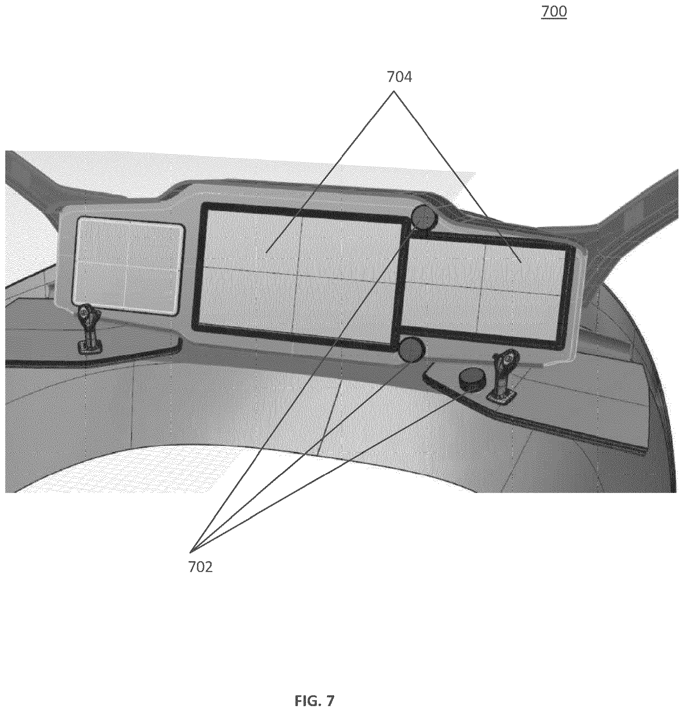

Turning now to FIG. 5, a perspective view 500 is shown of a cockpit layout for multiple flight displays and a multifunctional controller and display in accordance with one embodiment. In this embodiment, the multifunctional controller is shown in a Single Pilot Operation (SPO) Configuration. The multifunctional controller may also be used for Dual Pilot Operations (DPO) or larger flight decks. In this example, the multifunction controller 504 is located on the flight control panel along with multiple flight display panels 502 that show image data of the aircraft with reference to the flight performance characteristics as set by the controller 504. Turning now to FIG. 6, a perspective view 600 is shown of multiple flight displays 604 showing image data of the aircraft and a multifunctional controller and display 602 in accordance with another embodiment. Turning now to FIG. 7, a perspective view 700 is shown of multiple flight displays 704 and multiple multifunctional controllers and displays 702 in accordance with one embodiment. As demonstrated in this embodiment, multiple controllers 702 could be used to control different flight characteristics. The controllers 702 could also be located at different locations on the flight control panel.

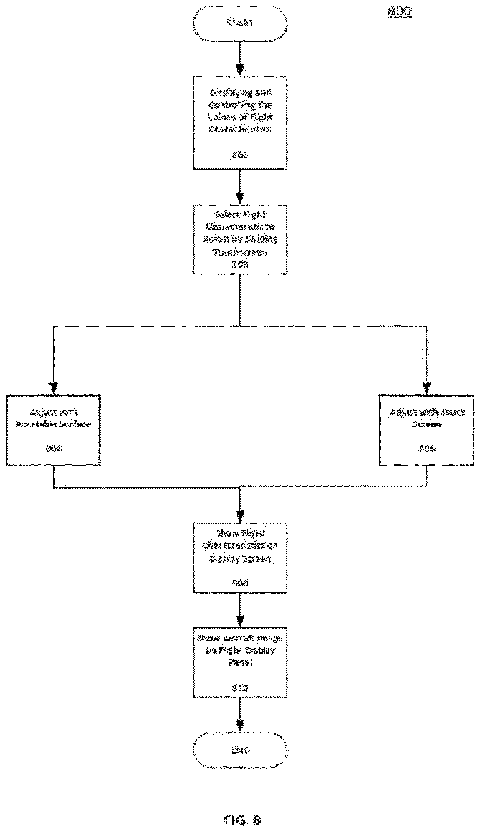

Turning now to FIG. 8, a flowchart 800 is shown depicting a method for providing dual touch and physical control inputs for an aircraft control panel. The method includes displaying and controlling the values of the flight performance characteristics by inputs from a cylindrical shaped control knob that is rotatably mounted on the aircraft control panel 802. The control knob includes a movable rotating surface around the exterior of control knob 804, that is manually adjusted by a user and a touch screen 806 along the circular top of the control knob that is tactilely adjusted by the user. The flight characteristics to be adjusted are selected by swiping the touchscreen in some embodiments 803. Once selected, the flight characteristics may be adjusted with the rotatable surface 804, with the touch screen 806 or both. A display screen located on the touch screen shows values of flight performance characteristics 808 that are adjusted by the user. Finally, a flight display panel shows image data of the aircraft with reference to the flight performance characteristics 810.

Techniques and technologies may be described herein in terms of functional and/or logical block components, and with reference to symbolic representations of operations, processing tasks, and functions that may be performed by various computing components or devices. Such operations, tasks, and functions are sometimes referred to as being computer-executed, computerized, software-implemented, or computer-implemented. In practice, one or more processor devices can carry out the described operations, tasks, and functions by manipulating electrical signals representing data bits at memory locations in the system memory, as well as other processing of signals. The memory locations where data bits are maintained are physical locations that have particular electrical, magnetic, optical, or organic properties corresponding to the data bits. It should be appreciated that the various block components shown in the figures may be realized by any number of hardware, software, and/or firmware components configured to perform the specified functions. For example, an embodiment of a system or a component may employ various integrated circuit components, e.g., memory elements, digital signal processing elements, logic elements, look-up tables, or the like, which may carry out a variety of functions under the control of one or more microprocessors or other control devices.

When implemented in software or firmware, various elements of the systems described herein are essentially the code segments or instructions that perform the various tasks. The program or code segments can be stored in a processor-readable medium or transmitted by a computer data signal embodied in a carrier wave over a transmission medium or communication path. The "computer-readable medium", "processor-readable medium", or "machine-readable medium" may include any medium that can store or transfer information. Examples of the processor-readable medium include an electronic circuit, a semiconductor memory device, a ROM, a flash memory, an erasable ROM (EROM), a floppy diskette, a CD-ROM, an optical disk, a hard disk, a fiber optic medium, a radio frequency (RF) link, or the like. The computer data signal may include any signal that can propagate over a transmission medium such as electronic network channels, optical fibers, air, electromagnetic paths, or RF links. The code segments may be downloaded via computer networks such as the Internet, an intranet, a LAN, or the like.

The following description refers to elements or nodes or features being "connected" or "coupled" together. As used herein, unless expressly stated otherwise, "coupled" means that one element/node/feature is directly or indirectly joined to (or directly or indirectly communicates with) another element/node/feature, and not necessarily mechanically. Likewise, unless expressly stated otherwise, "connected" means that one element/node/feature is directly joined to (or directly communicates with) another element/node/feature, and not necessarily mechanically. Thus, additional intervening elements, devices, features, or components may be present in an embodiment of the depicted subject matter.

In addition, certain terminology may also be used in the following description for the purpose of reference only, and thus are not intended to be limiting. For example, terms such as "upper", "lower", "above", and "below" refer to directions in the drawings to which reference is made. Terms such as "front", "back", "rear", "side", "outboard", and "inboard" describe the orientation and/or location of portions of the component within a consistent but arbitrary frame of reference which is made clear by reference to the text and the associated drawings describing the component under discussion. Such terminology may include the words specifically mentioned above, derivatives thereof, and words of similar import. Similarly, the terms "first", "second", and other such numerical terms referring to structures do not imply a sequence or order unless clearly indicated by the context.

For the sake of brevity, conventional techniques related to signal processing, data transmission, signaling, network control, and other functional aspects of the systems (and the individual operating components of the systems) may not be described in detail herein. Furthermore, the connecting lines shown in the various figures contained herein are intended to represent exemplary functional relationships and/or physical couplings between the various elements. It should be noted that many alternative or additional functional relationships or physical connections may be present in an embodiment of the subject matter.

Some of the functional units described in this specification have been referred to as "modules" in order to more particularly emphasize their implementation independence. For example, functionality referred to herein as a module may be implemented wholly, or partially, as a hardware circuit comprising custom VLSI circuits or gate arrays, off-the-shelf semiconductors such as logic chips, transistors, or other discrete components. A module may also be implemented in programmable hardware devices such as field programmable gate arrays, programmable array logic, programmable logic devices, or the like. Modules may also be implemented in software for execution by various types of processors. An identified module of executable code may, for instance, comprise one or more physical or logical modules of computer instructions that may, for instance, be organized as an object, procedure, or function. Nevertheless, the executables of an identified module need not be physically located together but may comprise disparate instructions stored in different locations that, when joined logically together, comprise the module and achieve the stated purpose for the module. Indeed, a module of executable code may be a single instruction, or many instructions, and may even be distributed over several different code segments, among different programs, and across several memory devices. Similarly, operational data may be embodied in any suitable form and organized within any suitable type of data structure. The operational data may be collected as a single data set or may be distributed over different locations including over different storage devices, and may exist, at least partially, merely as electronic signals on a system or network.

While at least one exemplary embodiment has been presented in the foregoing detailed description, it should be appreciated that a vast number of variations exist. It should also be appreciated that the exemplary embodiment or embodiments described herein are not intended to limit the scope, applicability, or configuration of the claimed subject matter in any way. Rather, the foregoing detailed description will provide those skilled in the art with a convenient road map for implementing the described embodiment or embodiments. It should be understood that various changes can be made in the function and arrangement of elements without departing from the scope defined by the claims, which includes known equivalents and foreseeable equivalents at the time of filing this patent application.

## Claims

1. An apparatus for providing dual touch and physical control inputs for an aircraft control panel, comprising:
a cylindrical shaped control knob that is rotatably mounted on the aircraft control panel, where the control knob comprises,
a movable surface around the exterior of control knob, where the movable surface may be manually adjusted by a user,
a touch screen along the circular top of the control knob, where the touch screen may be tactilely adjusted by a user, and
a display screen located on the touch screen that shows values of flight performance characteristics, where the values of the flight performance characteristics are controlled by inputs from the control knob; and
a flight display panel that shows image data of the aircraft with reference to the flight performance characteristics.

2. The apparatus of Claim 1, where the movable surface of the control knob is manually adjusted by rotating the movable surface.

3. The apparatus of Claim 1, where the control knob is manually adjusted by nudging the control knob.

4. The apparatus of Claim 1, where the touch screen of the control knob is tactilely adjusted by pressing.

5. The apparatus of Claim 1, where the touch screen of the control knob is tactilely adjusted by pressing a keypad displayed on the touch screen.

6. The apparatus of Claim 1, where the touch screen of the control knob is tactilely adjusted by swiping.

7. The apparatus of Claim 1, where the flight performance characteristics comprise altitude.

8. The apparatus of Claim 1, where the flight performance characteristics comprise airspeed.

9. The apparatus of Claim 1, where the flight performance characteristics comprise heading.

10. The apparatus of Claim 1, where the flight performance characteristics comprise radio frequency.
